# EUROPEAN PATENT APPLICATION

(11) **EP 2 377 453 A1**
(43) Date of publication of application: **19.10.2011**
(21) Application number: 11174260.7
(22) Date of filing: 27.08.2009
(51) Int. Cl.: A47L 15/42

(54) **Dishwasher, particularly of professional type, with thermal energy regeneration, and working process thereof**

(62) Divisional of application: 09425331.7
(71) Applicant: Emainox S.p.A., 33098 Valvasone (PN) (IT)
(72) Inventor: Scodellaro, Fulvio, 33098 Valvasone (PN) (IT)
(74) Representative: Gonella, Mario

(57) **Abstract**

The present invention refers to a dishwasher apparatus, in particular a dishwasher apparatus of the professional kind, provided with a heat recovery arrangement, and to the working process thereof.

A dishwasher apparatus according to the invention comprises a dishwashing chamber (1), a vessel (4) for collecting the process liquor (3), a filtering system (5) for the process liquor (3), and a heat-recovery arrangement (6) adapted to enable heat to be exchanged between at least a portion of said process liquor (3) and an amount of water taken in from a water supply source. The heat-recovery arrangement (6) is provided with a plate-type heat exchanger (12) which comprises a first fluid line provided with a first inflow section (13) fluidly connected to a three-way valve (14) fluidly communicating with the vessel (4) via a first outlet conduit (15), and a first outflow section (16) fluidly connected to a second outlet conduit (17); the plate-type heat exchanger (12) further comprises a second fluid line arranged according to a countercurrent-flow pattern relative to the first fluid line; the second fluid line is provided with a second inflow section (18) fluidly communicating with the water supply source and a second outflow section (19) fluidly connected to a boiler (8).

The filtering system (5) is located inside the vessel (4) and is removably mounted on to a bottom aperture (21) of a hopper (22) formed of a non-perforated wall extending around said bottom aperture (21).

## Description

### DESCRIPTION

The present invention refers to a dishwasher apparatus, in particular a dishwasher apparatus of the professional kind, provided with a heat recovery arrangement, and to the working process thereof.

Usually, in a dishwasher apparatus as known from the prior art the washload items are set to undergo a washing cycle under utilization of hot water and a cleaning agent, or detergent. This washing cycle is followed by one or more rinsing cycles that are performed in either cold or hot water. A pre-wash step with either cold or hot water under possible addition of a certain amount of cleaning agent may be provided to be performed prior to starting the actual washing cycle. The necessary amount of hot water that is required for the above-noted washing process steps to be adequately carried out, is supplied by a boiler that heats up the water, flowing in from the water supply line under temperature conditions that are typically ranging from 15°C to 20°C, up to the temperature required for the process step to be carried out, which generally is situated anywhere in a range from 45°C to 90°C. Considering the extent of the temperature rise, which the boiler has to cause the amount of water to be used to go through, and considering that, throughout the entire working cycle of the dishwasher apparatus, such amount of water can be as huge as quite a few dozen litres, it can be most readily appreciated that the energy used by the apparatus to just heat up the process water makes up a rather significant percentage of the overall energy usage of the dishwasher, actually.

In an attempt to cut down the energy usage figures of dishwashing machines in general, various heat-recovery systems and arrangements have been devised and provided, which work by substantially re-using part of the hot water due to be let off the machine at the end of an operating cycle thereof, to the purpose of preheating a second amount of water taken in from the water supply line prior to such water being then sent to the boiler in view of being further heated up, should any such further heating-up be also required, actually. This measure is effective in ensuring that the boiler is required to increase the temperature of the water starting no longer from the typical temperature conditions in which the same water lies when taken in from the water supply line, but rather from a temperature condition that is closer to the desired process temperature. The duty cycle, which the boiler is required to go through in view of filling up the temperature difference existing between the desired process temperature and the temperature of the pre-heated water, is advantageously curtailed.

A solution of the above-noted kind is shown in the US patent publication no. 5,660,193, which discloses a dishwasher apparatus that is provided with a concentric-tube heat-exchanger comprising a first water line that receives water flowing in from the water supply line, and delivers it into the boiler upon causing it to flow through a heat-exchange region, and a second water line that receives hot water (at a temperature of approx. 60°C) being let off a washing water reservoir, and stored in a secondary reservoir, and delivers it to drain upon causing it to flow through the above-mentioned heat-exchange region in a countercurrent flow pattern relative to the afore-noted first water line. In such heat-exchange region there takes place a process in which heat is transferred from the hot water stored in the secondary reservoir to the water being let in from the water supply line.

An embodiment of the above-cited kind, however, carries a number a drawbacks with it, as this shall be described below.

In the first place, while the use of a concentric-tube heat exchanger allows on the one side soiled liquids, i.e. liquids containing quite high a percentage of solid particles in a suspension therein, as the water flowing in from the washing water reservoir actually is, to be handled in a reasonably adequate manner, on the other side it does not allow any reasonably high heat-exchange factor to be reached between the liquids that are caused to flow therethrough. The heat recovery effect that can be reached with such heat exchanger of the concentric-tube kind turns therefore out as being rather poor, so that it is only partially advantageous when considered against the higher construction and installation costs implied by the use of such heat exchanger, as well as the resulting overall design and assembly complications.

A second disadvantageous feature of the dishwasher apparatus described in US 5,660,193 lies in the system used to filter the soiled water flowing in from the washing water reservoir. Such filtering system is substantially comprised of perforated plates that are located one at the bottom of the washing chamber, upstream to the washing water reservoir, and the other one on the bottom of the secondary reservoir used to store the hot washing water, at a point close to the inflow section of the conduit that lets said hot washing water into the concentric-tube heat exchanger. During the operation of the dishwasher apparatus, the food remnants and other soil particles that are loaded into the machine with the washload items end up by clogging the filters, thereby forming a progressively thickening covering layer that builds up in a disadvantageous manner both inside the washing chamber, where the dishes are handled, actually, so that it directly affects the overall washing effect of the machine, and inside the secondary reservoir, where the hot washing water is stored, so that the same reservoir requires to be quite frequently disassembled and cleaned.

A further drawback of the kind of embodiment disclosed in US 5,660,193 lies in the provision itself of a secondary reservoir to store the hot washing water, since this implies a certain extent of cooling down of such hot water prior to its being able to be re-used for heat recovery purposes, as well as a considerable bulk that adds to the overall size of the dishwasher apparatus and, therefore, the space required to allow the latter to be adequately installed, as compared to similar dishwashing machines that are not provided with such heat recovery arrangement.

Another major disadvantage of the dishwasher apparatus described in US 5,660,193 lies in the fact that when the need arises for the vessel used to collect the process liquid to be fully emptied, as this is for instance required when the filters have to be cleaned or in the case that the dishwashing machine itself has to undergo maintenance, the whole bulk or at least part of such process liquid has necessarily to be conveyed through the concentric-tube heat exchanger, thereby unavoidably causing the accumulation of dirt to further increase inside the same heat exchanger and, as a result, reducing the heat-exchange performance thereof.

It is therefore an object of the present invention to provide a dishwasher apparatus, in particular such dishwasher apparatus intended for use in professional applications, provided with heat recovery means, which is effective in doing away with the drawbacks and disadvantages of dishwashing machines provided with heat recovery feature as they are known from the prior art.

Within such general object, it is a purpose of the present invention to provide a dishwasher apparatus of the above-noted kind, which is effective in ensuring a heat recovery effect that is clearly better than the one typical of prior-art machines of the same kind.

A further purpose of the present invention lies in providing a dishwasher apparatus of the above-noted kind, in which the heat-recovery arrangement is capable of working at a high efficiency level, while implying low manufacturing and installation costs.

Yet another purpose of the present invention is to provide a dishwasher apparatus of the above-noted kind with an improved filtering system that is effective in preventing food remains and other typical soil particles from being able to be retained and accumulate neither inside the actual washing chamber of the apparatus nor inside the heat recovery arrangement thereof, wherein the same filtering system can be easily and conveniently disassembled and removed to periodical cleaning and maintenance purposes.

Another, equally important purpose of the present invention lies in avoiding undesired heat losses, while keeping the overall size of the dishwasher apparatus substantially unaltered.

It is a further object of the present invention to provide an working process for a dishwasher apparatus, in particular a dishwasher apparatus of the professional kind, which is effective in preventing the heat-recovery arrangement from becoming caked with soil, thereby favouring constancy in the heat-recovery performance thereof.

Within such further object, it is another purpose of the present invention to provide an working process for a dishwasher apparatus, in particular a dishwasher apparatus of the professional kind, which is effective in ensuring as high and efficient as possible a heat-recovery effect, while preventing valuable thermal energy from being wasted, wherein the same working process is also effective in both improving the results that can be obtained with a washing cycle and favouring at the same time a reduction in the usage of washing and rinsing agents used in the process.

According to the present invention, the above-noted aims are reached in a dishwasher apparatus incorporating the features and characteristics as defined and recited in the appended claim 1, as well as in a related working process incorporating the features and characteristics as defined and recited in the appended claim 3.

Advantages and features of the present invention will anyway be more readily understood from the description that is given below by way of non-limiting example with reference to the accompanying drawings, in which:
- Figure 1 is a schematic view of a first embodiment of the dishwasher apparatus according to the present invention;
- Figure 2 is a schematic view of a modified embodiment of the dishwasher apparatus shown in Figure 1;
- Figure 3 is a view of a detail of the filtering system for the process liquor installed in the dishwasher apparatus;
- Figure 4 is a perspective bottom view of the filtering system shown in Figure 3, as viewed in the state in which it is disassembled from the dishwasher apparatus;
- Figure 5 is a perspective exploded view of the filtering system shown in Figure 3.

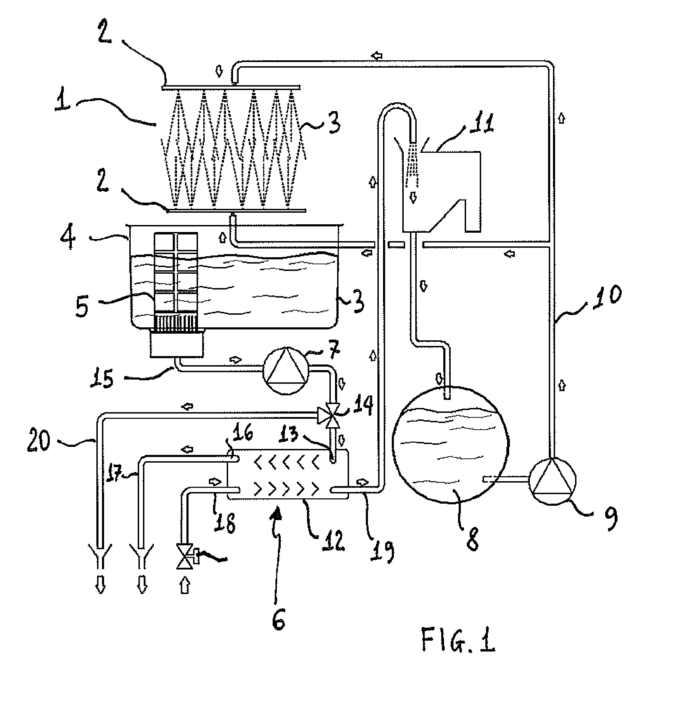

Illustrated in a schematic representation Figure 1 there is a dishwasher apparatus, in particular of the kind used in professional applications, which is made in accordance with the present invention. To the purpose of simplifying the related graphic representation, the sole water circuits provided for rinsing and water discharge have been represented in Figure 1, whereas the water circuit dedicated to the actual dishwashing cycle, including the related pump for circulating the process liquor, has been intentionally omitted, wherein such circuit shall anyway be understood as being provided in the dishwasher apparatus in such a form as this is conventionally known in the art.

The dishwasher apparatus according to the present invention comprises a dishwashing chamber 1 provided with spray members 2 for letting into said chamber a process liquor 3, which in general consists of water containing a detergent product for the actual washing cycle, or simply of water - possibly added with some kind of rinsing product - for the rinsing steps of the dishwashing process. The dishwasher apparatus further comprises a vessel 4 designed to collect the process liquor 3, as well as a filtering system 5 designed to retain the solid matters and particles that are removed or flushed off the dishes, while preventing them from scattering around inside the vessel 4 and ensuring an acceptable clean condition of the process liquor 3 contained in the vessel 4. A heat-recovery arrangement 6 is provided to transfer heat removed from the process liquor 3, as the latter is withdrawn from the vessel 4 by means of a pump 7, to an amount of water being taken in from a water supply source, which may for example be the water supply line of the location. The pump 7 is provided at a point located between the heat-recovery arrangement 6 and the filtering system 5. There is also provided a boiler 8, which is designed to receive water, as taken in from said water supply source and submitted to the heat-exchange treatment in the heat-recovery arrangement 6, in view of rising the water temperature to the required process value and delivering such water to the spray members 2 by means of a pump 9 via appropriate connecting conduits 10. Between the boiler 8 and the heat-recovery arrangement 6 there may be provided a backflow preventing chamber of the kind that is generally referred to as an air-break or airgap device in the art. Such air-break chamber 11 enables an effective physical separation to be obtained between two or even more pipe conduits, while anyway ensuring liquor conveyance from the upstream side to the downstream side of the same chamber.

The heat-recovery arrangement 6 comprises a plate-type heat exchanger 12 of a kind as this is generally known as such in the art. Such plate-type heat exchanger 12 comprises a first fluid line provided with a first inflow section 13 that is fluidly connected to a three-way valve 14, the latter being fluidly communicating with the vessel 4 via a first outlet conduit 15, and a first outflow section 16 that is fluidly connected to a second outlet conduit 17 that conveys the process liquor 3 contained in the vessel 4 outside the dishwasher apparatus. The plate-type heat exchanger 12 further comprises a second fluid line, which is arranged in a countercurrent, or counterflow, pattern relative to the above-mentioned first fluid line, is provided with a second inflow section 18 that is fluidly communicating with a water supply source, and a second outflow section 19 that is fluidly connected to the boiler 8. The three-way valve 14 comprises a third outlet conduit 20 that enables the process liquor 3 collected into and contained in the vessel 4 to flow out and be discharged outside the dishwasher apparatus, while preventing the same process liquor 3 from having to flow through the plate-type heat exchanger 12 when discharged from the machine. In other words, this third outlet conduit enables the content of the vessel 4 to be discharged in a manner in which it by-passes the heat exchanger 12.

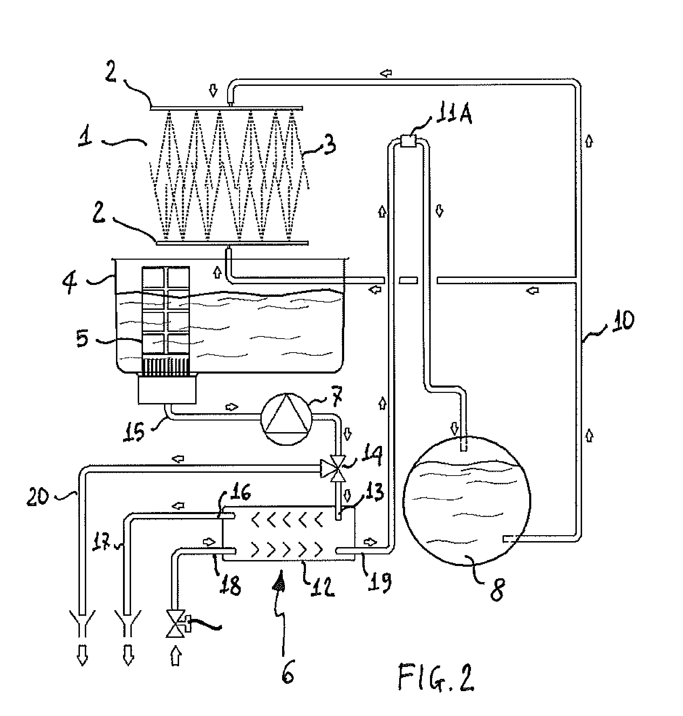

According to the modified embodiment represented in Figure 2, instead of the air-break backflow preventing chamber 11 shown in Figure 1, there may be provided a non-return valve 11A, which will then perform substantially the same task as said air-break backflow preventing chamber 11. Reference numerals in Figure 2 that correspond to the ones used in Figure 1 shall be understood as indicating same and similar component parts as the ones used in the dishwasher apparatus described with reference to Figure 1, so that any further description thereof is intentionally omitted. This modified embodiment making use of said non-return valve 11A has the advantage of ensuring that the entire rinsing circuit is kept under pressure, as well as doing away with the need of using a pump (indicated with the reference numeral 9 in Figure 1) for taking water from the boiler 8 and delivering it to the spray members 2.

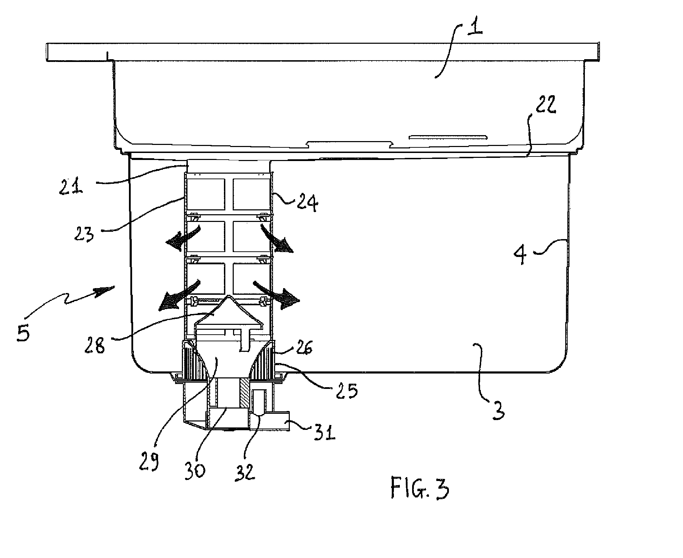

Shown in Figure 3 there is the filtering system 5 which is accommodated inside the vessel 4 and is mounted in a removable manner onto a bottom aperture 21 of a hopper 22 formed of a non-perforated wall surrounding the aperture 21. This non-perforated wall forms a physical barrier separating the vessel 4 from the dishwashing chamber 1 of the dishwasher apparatus. The process liquor 3 used in the dishwashing process is solely able to flow from the dishwashing chamber 1 into the vessel 4 through the aperture 21 and due to the conveying effect ensured by the hopper 22. Further to the process liquor 3, owing to the wall of the hopper 22 having no perforations, also the solid matters and particles suspended in the liquor, such as for example food remains and soil removed from the dishes, are caused to flow out into the filtering system, where they are retained in order to prevent them from being able to continuously come in contact with the dishwashing chamber 1 or being circulated into and through the fluid conduits of the dishwasher apparatus, such as for example the conduit provided to carry the process liquor to the plate-type heat exchanger 12, which might otherwise get clogged.

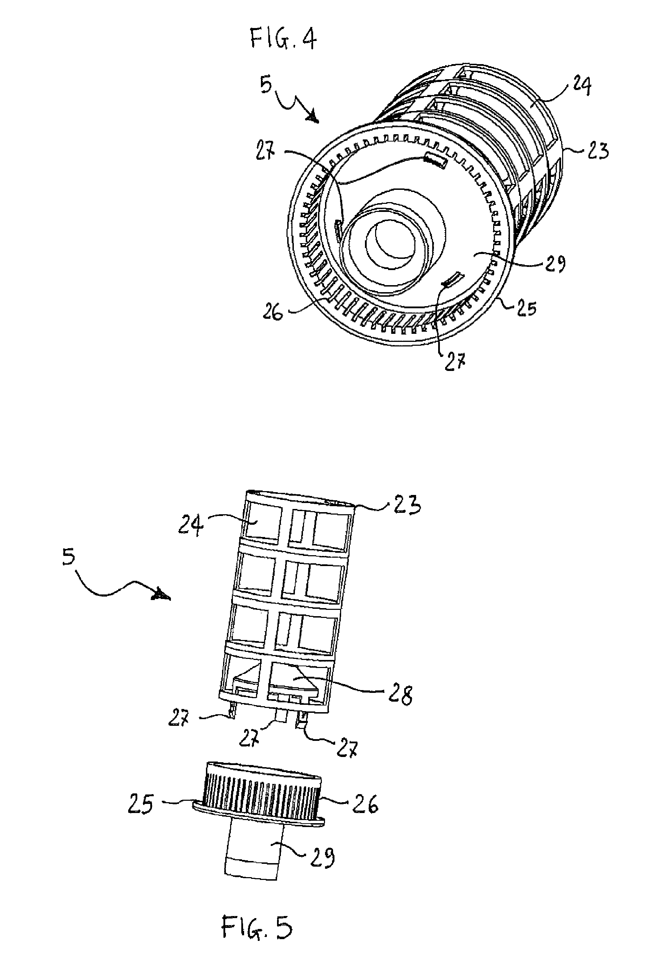

With reference to Figures 4 and 5, the filtering system 5 comprises a tubular member 23 provided with a net strainer 24, whose meshes preferably are in the form of square apertures having sides measuring 1 millimetre. The tubular member 23 extends into the vessel 4 between the aperture 21 and a support 25, on which the tubular member 23 is mounted removably. In particular, the tubular member 23 may be mounted to the support 25 by means of hooks 27, which are formed on elastically deformable tabs and are adapted to get secured into appropriate apertures provided in the support 25. The support 25 is provided with a fret-worked cylindrical body 26, whose through-apertures are preferably in a rectangular shape with their sides measuring 2 millimetres and 40 millimetres.

The filtering system 5 further comprises a conical shielding body 28 (Figures 3 and 5), which takes a position in which it faces a collecting receptacle 29 (Figure 3). Preferably, the shielding body 28 is formed at an end portion of the tubular member 23, while the collecting receptacle 29 is formed in an axial portion of the fret-worked cylindrical body 26 so as to form, relative to the latter, two fluidly separated regions. The support 25 is removably received in a box-shaped body 30 (Figure 3), in which there is formed an outlet-conduit coupling sleeve 31 provided with a bifurcate inflow mouth 32, i.e. an inflow mouth having two inflow sections for the process liquor 3 lying on different levels.

As can be best seen in Figure 3, the arrows indicate the flow-path followed by the process liquor 3 through the filtering system 5. The liquor 3, and the solid matters possibly suspended therein, flow through the aperture 21 and into the tubular member 23. The net strainer 24 retains the solid matters inside the tubular member 23, thereby depurating the process liquor 3, which is then able to flow in a cleaner state into the collecting vessel 4. As collected into the vessel 4, the liquor flows then back into and through the filtering system 5 via the fret-worked cylindrical body 26, whereas the solid matters retained in the tubular member 23 fall down onto the shielding body 28 and collect into the collecting receptacle 29, without any possibility for them to enter into contact with the interior of the fret-worked cylindrical body 26 that receives the process liquor 3 flowing in from the vessel 4. The solid matters collecting into and retained in the collecting receptacle 29 cannot rise up again towards the tubular member 23, either, due to them being prevented from doing so by the shielding body 28. Thereby, the collecting receptacle 29 and the shielding body 28 combine to form a containment body for the solid matters removed from the process liquor 3.

The working process of the dishwasher apparatus according to the present invention shall now be described with particular reference to the rinsing cycle and the heat recovery step as performed by the same apparatus.

A given amount of water is taken in from a water supply source, such as for instance a water mains. An appropriate amount of cleaning agent is added to such water and mixed therein so as to form a process liquor 3 for treating the washload items. This process liquor 3 is heated up to a suitable extent by the boiler 8 and delivered to the spray members 2 provided inside the washing chamber 1 as required to perform one or more dishwashing cycles. The most adequate temperature as required to comply with the actual process parameters of the cycle, which the process liquor 3 is due to go through, is maintained by electric heating elements (not shown) provided inside the vessel 4, where the liquor 3 is collected and continuously withdrawn during the operation cycle of the dishwasher for it to be sent to the spray members 2. The solid matters, such as food remains and the like, which are removed from the dishes during the washing cycle, are conveyed into the filtering system 5, where they are retained inside a containment body. When the washing cycle of the dishwasher's operation eventually ends and the need arises for a subsequent rinsing cycle to be started in view of definitively removing the cleaning agent from the dishes, a portion of process liquor 3 contained in the vessel 4 at a temperature ranging between 55 and 60°C, is withdrawn therefrom by the pump 7, to an amount that preferably lies between some three to four litres, and is delivered to a three-way valve 14 via a first discharge conduit. In this phase of the operation cycle, the three-way valve 14 is set in a first position thereof, in which it enables the plate-type heat exchanger 12 and the vessel 4 to be fluidly communicating with each other, so that the process liquor 3 is able to enter the plate-type heat exchanger 12 via the first inflow section 13 thereof. At the same time, an amount of water is taken in from a water supply source, such as for example the water mains, and delivered into the plate-type heat exchanger 12 via the second inflow section 18 thereof. In such inflow section 18 of the heat exchanger, the inflowing water is usually at a temperature lying anywhere between 15 and 20°C. Then, inside the plate-type heat exchanger 12, the process liquor 3 caused to flow therethrough transfers part of its heat to the water taken in from the water supply source and flowing through the same heat exchanger in a countercurrent-flow pattern, thereby heating such water up to a temperature of approx. 45°C to 50°C that can be measured at the second outflow section 19 of the plate-type heat exchanger 12. The process liquor 3 leaves the plate-type heat exchanger 12 via the first outflow section 16 thereof and is let off the dishwasher apparatus via the second discharge or outlet conduit 17. The water that has in this way been pre-heated by the process liquor 3 is sent towards the dishwashing chamber 1 of the apparatus, where it will be used to carry out a rinsing cycle, by flowing through the air-break backflow preventing arrangement 11, 11 A and the boiler 8, where the water temperature may be further increased.

When the dishwasher apparatus has to be put out of operation, as for instance in the case of a periodical cleaning of the filtering system 5 or, anyway, after a preestablished number of washing cycles, the vessel 4 must be completely emptied. For such an emptying step to be done appropriately, the three-way valve 14 shall be correspondingly set in a second position thereof, in which it will prevent the plate-type heat exchanger 12 and the vessel 4 from fluidly communicating with each other, and the pump 7 shall be then energized to let the liquor 3 out of the vessel 4. When exiting the vessel 4 in this way, the liquor 3 does not flow through the heat exchanger 12, but rather by-passes it in that it is let off via the third discharge conduit 20. In this way, the risk is prevented that the heat exchanger 12 may become soiled even in the case in which the filtering system 5 is removed for periodical cleaning.

Fully apparent from the above description is therefore the ability of the present invention to effectively reach all of the afore-noted aims of objects by providing a dishwasher apparatus ensuring a high heat-recovery coefficient through the use of a high-efficiency, low-cost heat exchanger. In an advantageous manner, the application of an arrangement for recovering heat from discharge water based on the use of a plate-type heat exchanger is made possible by the utilization of an improved filtering arrangement that substantially prevents any solid matter being suspended in the water used for washing from being able to enter the same heat exchanger in a way that might impair the efficient operation thereof. A dishwasher apparatus, in particular of the professional type, embodied in accordance with the present invention enables the quality of the washing water being re-circulated in the dishwashing chamber of the apparatus to be improved, thereby bringing about an advantageous reduction in detergent usage. Maintaining the required process temperature of the water inside the dishwashing chamber of the apparatus is facilitated not only by the thermal insulation of the vessel, but also by the absence of any great number of surfaces through which heat might possibly be wasted.

A further advantage that can be reached with a dishwasher apparatus made in accordance with the present invention, and operating according to an operating principle as claimed hereinafter, lies in a reduction in the usage of rinsing agents resulting from the improvement in the quality of the washing process and the concurrent reduction in the amount of water to be used for rinsing the dishes.

It shall be appreciated that the materials used, as well as the shape and the sizing of the various parts, may each time be selected so as to more appropriately meet the particular requirements or suit the particular application.

It shall further be appreciated that various parts and arrangements of the apparatus according to the present invention shall certainly not be solely embodied in the way as described and illustrated above, but may rather be embodied in a number of different manners without departing from the scope of the present invention.

## Claims

1. Dishwasher apparatus, in particular of professional type, comprising a dishwashing chamber (1), a vessel (4) for collecting the process liquor (3), a filtering system (5) for the process liquor (3), and a heat-recovery arrangement (6) adapted to enable a heat exchange between at least a portion of said process liquor (3) and an amount of water taken in from a water supply source, said heat-recovery arrangement (6) being provided with a plate-type heat exchanger (12), **characterized in that** said filtering system (5) is located inside the vessel (4) and is removably mounted onto a bottom aperture (21) of a hopper (22) formed of a non-perforated wall extending around said bottom aperture (21), and **in that** said plate-type heat exchanger (12) comprises a first fluid line provided with a first inflow section (13) fluidly connected to a three-way valve (14) fluidly communicating with the vessel (4) via a first outlet conduit (15), and a first outflow section (16) fluidly connected to a second outlet conduit (17), said plate-type heat exchanger (12) further comprising a second fluid line arranged according to a countercurrent-flow pattern relative to said first fluid line, said second fluid line being provided with a second inflow section (18) fluidly communicating with said water supply source and a second outflow section (19) fluidly connected to a boiler (8).

2. Dishwasher apparatus according to claim 1, comprising a third outlet conduit (20) fluidly communicating with the three-way valve (14), said third outlet conduit (20) by-passing the plate-type heat-exchanger (12).

3. Dishwasher apparatus according to claim 1 or 2, wherein an air-break separation chamber (11) is provided between said boiler (8) and the plate-type heat-exchanger (12).

4. Dishwasher apparatus according to claim 1 or 2, wherein a non-return valve (11A) is provided between said boiler (8) and the plate-type heat-exchanger (12).

5. Dishwasher apparatus according to any of the preceding claims, wherein pump means (7) are provided between the plate-type heat-exchanger (12) and the filtering system (5).
